# EUROPÄISCHE PATENTANMELDUNG

(11) **EP 4 542 319 A1**
(43) Veröffentlichungstag der Anmeldung: **23.04.2025**
(21) Anmeldenummer: 23204981.7
(22) Anmeldetag: 20.10.2023
(51) Int. Cl.: G05B 19/418

(54) **COMPUTERIMPLEMENTIERTE ORCHESTRIERUNGSINSTANZ UND VERFAHREN ZUM BETREIBEN EINER TECHNISCHEN ANLAGE**

(71) Anmelder: Siemens Aktiengesellschaft, 80333 München (DE)
(72) Erfinder: Maurmaier, Mathias, 70839 Gerlingen (DE); Romberg, Thomas, 75245 Neulingen (DE); Schneller, Martin, 76297 Stutensee (DE); Spaethe, Fabian, 76185 Karlsruhe (DE); Stutz, Andreas, 76344 Eggenstein-Leopoldshafen (DE)
(74) Vertreter: Siemens Patent Attorneys

(57) **Zusammenfassung**

Vorgeschlagen wird eine computerimplementierte Orchestrierungsinstanz (9) zur Orchestrierung wenigstens eines technischen Moduls (2, 3) innerhalb einer technischen Anlage (1), insbesondere Prozess- oder Fertigungsanlage, die dazu ausgebildet ist,
- von dem technischen Modul (2, 3) eine Eingangsvariable (10, 11, 13, 14) auszulesen, welche Eingangsvariable (10, 11, 13, 14) eine Bereitschaft des technischen Moduls (2, 3) angibt, einen Zustand des technischen Moduls (2, 3) zu ändern,
- eine weitere Variable zu ermitteln, deren Wert von einem oder mehreren weiteren Zuständen, Werten oder sonstigen veränderlichen Daten des technischen Moduls (2, 3) oder eines oder mehrerer weiterer technischer Module (2, 3) abhängt,
- beim Vorliegen bestimmter Kombinationen von Werten der Eingangsvariable (10, 11, 13, 14) und der weiteren Variable ein Ändern des Zustandes des technischen Moduls (2, 3) durch einen Trigger von außerhalb des technischen Moduls (2, 3) zu ermöglichen oder für diese zu unterbinden.

## Beschreibung

Die Erfindung betrifft eine computerimplementierte Orchestrierungsinstanz zur Orchestrierung wenigstens eines technischen Moduls innerhalb einer technischen Anlage. Außerdem betrifft die Erfindung ein Leitsystem für eine technische Anlage, insbesondere Prozess- oder Fertigungsanlage. Zudem betrifft die Erfindung eine technische Anlage mit einer Orchestrierungsinstanz. Außerdem betrifft die Erfindung ein Verfahren zum Betreiben eines technischen Moduls in einer technischen Anlage.

Vor allem in der Pharmaindustrie und Spezialchemie bestehen hohe Anforderungen an Betreiber technischer Anlagen schnell auf geänderte Marktanforderungen reagieren zu können. Modulare Anlagen ermöglichen es den Anlagenbetreibern, die sogenannte "Time-to-Market" erheblich zu verkürzen und durch einen aufwandsarmen Umbau der Anlage schnell auf geänderte Marktbedingungen reagieren zu können. Die Anlagenbetreiber können sich hierzu einen Pool an modularen Einheiten (z.B. Prozesseinheiten) aufbauen, mithilfe dessen sie eine konkrete Anlage mittels der sogenannten Orchestrierung zusammenstellen können. Soll die Anlage umgebaut werden, so werden einzelne Module entnommen und durch andere, zum Beispiel leistungsfähigere Module ersetzt.

Bei bislang bekannten Automatisierungssystemen wie "PCS 7" oder dem "TIA Portal" der Firma Siemens wird die Orchestrierung von Modulen auf klassische Konzepte der Automatisierungstechnik abgebildet. Dabei werden Kommunikationsverbindungen projektiert, Bedienbilder entwickelt und übergeordnete Ablaufsequenzen mit Sprachen wie "S7-Graph" oder "SFC (Sequential Flow Chart)" erstellt. Dies ist aufwändig und aufgrund mangelnder einschlägiger Kenntnisse von Verfahrenstechnikern nur schwer durchführbar.

In der Druckschrift WO 2016/074730 A1 wird eine Methode beschrieben, wie eine modulare technische Anlage mittels Selbstbeschreibungsinformationen der Module erstellt werden kann. Diese Methode basiert auf online verfügbaren Selbstbeschreibungsinformationen der einzelnen Module.

Generell stellen die Flexibilität und Adaptivität von Produktionssystemen einen Schlüsselfaktor für zukünftige Produktionssysteme in volatilen Märkten dar. Sie lassen sich durch die Orchestrierung von intelligenten technischen Modulen (auch als "Equipment Assemblies oder "Package Units" bezeichnet) zu einer Anlage erzielen.

Jedes technische Modul bietet dabei Funktionen an, die von einer übergeordneten Orchestrierungsinstanz (auch als "Orchestration Layer" bezeichnet) parametriert und in der richtigen Reihenfolge aufgerufen werden können. Je kleinteiliger die Funktionen sind, desto flexibler können daraus größere Funktionen orchestriert werden. Kleinteilige Funktionen erfordern jedoch einen höheren Aufwand für deren Koordination und Engineering. Bietet ein technisches Modul eher grobgranulare Funktionen an, so sind diese für viele Anwendungsfälle zu spezifisch, wodurch wiederum die Flexibilität eingeschränkt ist. In der Prozessindustrie steht in Anlehnung an die Norm ISA-88 bzw. die IEC 61512 ein prozedurales Modell zur Verfügung, das verschiedene Granularitätsebenen für die einzelnen Funktionen beschreibt.

Das in der VDI/VDE/NAMUR 2658 beschriebene Module Type Package (MTP)-Konzept stellt beispielsweise eine Standardisierungsaktivität dar, die Laufzeitschnittstellen und Semantik-Informationsmodelle spezifiziert, um einen weitestgehend automatisierten Integrationsprozess intelligenter Module, sogenannter Gerätebaugruppen, in ein übergeordnetes Steuerungssystem, die sogenannte Orchestrierungsinstanz, zu ermöglichen. Der Standard führt ein Automatisierungsdienstkonzept unter Verwendung eines zentralen Orchestrierungsmechanismus für die Verknüpfung mehrerer Automatisierungsdienstleistungen ein.

Jedes technische Modul (bzw. "Equipment Assembly") bietet Dienste an, die von der Orchestrierungsinstanz parametriert und in der richtigen Reihenfolge, teilweise auch parallel, aufgerufen werden können. Gemäß ISA S88 und auch VDI/VDE/NAMUR 2658 haben die Dienste eine zustandsbasierte Schnittstelle mit einem im Regelfall durch den jeweiligen Standard spezifizierten Zustandsmodell. Die Zustandsübergänge der Dienste können vom Orchestration Layer aus entweder durch den Operator der Anlage am Bedienbild oder durch eine Schrittkette bzw. ein Rezeptsystem getriggert werden.

Zwischen den einzelnen Diensten wie auch zwischen Elementen der Einzelsteuerebene (Sensoren, Aktoren) und den Diensten bestehen im Allgemeinen Abhängigkeiten. Diese Abhängigkeiten bedeuten, dass gewisse Zustandsübergänge zu gewissen Zeitpunkten nicht ausgeführt werden dürfen oder zeitgleich ablaufen müssen. Sofern die Abhängigkeiten innerhalb eines technischen Moduls bekannt sind, können sie vom Hersteller des technischen Moduls berücksichtigt werden. Dies erfolgt im Regelfall in der Automatisierungssoftware des technischen Moduls.

Zum Beispiel darf ein Dienst nur dann gestartet werden, wenn alle von dem Dienst benötigten Aktoren im sogenannten "Automatik-Mode" sind, also von der Automatisierungssoftware angesteuert werden können. Ob ein Dienst zu einem gewissen Zeitpunkt gestartet, beendet, pausiert oder zurückgesetzt werden darf, wird der überlagerten Orchestrierungsinstanz über eine Variable, im Folgenden "CommandEnable" genannt, mitgeteilt.

In prozesstechnischen Anlagen ergeben sich durch die Verschaltung mehrerer technischer Module weitere Abhängigkeiten, welche die Hersteller der technischen Module nicht kennen und somit auch nicht in der Automatisierungssoftware berücksichtigen können. Diese Abhängigkeiten können in den heute verfügbaren Lösungen nicht programmiertechnisch erfasst werden, weil der Anlagenintegrator die Software der technischen Module nicht anpassen kann.

Bei bekannten modularen technischen Anlagen gibt es zwei Ansätze, das zuvor erläuterte Problem zu lösen:
Gemäß einem ersten bekannten Ansatz spezifiziert der Anlagenbetreiber die Verriegelungen frühzeitig, während die Hersteller der technischen Module diese direkt in der Automatisierungssoftware realisieren. Dieser Ansatz bringt bedeutende Limitierungen bezüglich der Flexibilität mit sich: Zum einen erfordert er eine Anpassung der Automatisierungssoftware der technischen Module, wenn diese in einer neuen Anlage eingesetzt werden. Zum anderen verknüpft die Verriegelungslogik oftmals Informationen aus mehreren technischen Modulen. Dabei müssten Daten aus anderen technischen Modulen über die Orchestrierungsinstanz an das verarbeitende technische Modul weitergeleitet werden. Diese Weiterleitung muss aufwändig projektiert werden. Zur Laufzeit der technischen Anlage ist daher in diesem Fall mit hohen Kommunikationslasten und -zeiten zu rechnen.

Gemäß einem zweiten bekannten Ansatz wird eine Steuereinheit (engl. Controller) zwischen die technischen Module und das orchestrierende System geschaltet, durch welchen alle Daten hindurchgehen und in welchem Verriegelungen projektiert werden können. Die Steuereinheit verursacht dabei zusätzliche Hardware-Kosten. Zudem wird die Steuereinheit in diesem Fall schnell zu einem "Flaschenhals", da sie eine Vielzahl von Datenpunkten von den unterlagerten technischen Modulen lesen und an die übergelagerte Orchestrierungsinstanz weitergeben bzw. von dieser entgegennehmen und an das technische Modul senden muss, obwohl für die eigentlichen Verriegelungen nur wenige Datenpunkte benötigt werden.

Der Erfindung liegt die Aufgabe zugrunde, eine Integration eines technischen Moduls in eine technische Anlage und den Betrieb des technischen Moduls zu vereinfachen und effizienter zu gestalten.

Diese Aufgabe wird gelöst durch ein Computerimplementierte Orchestrierungsinstanz zur Orchestrierung wenigstens eines technischen Moduls innerhalb einer technischen Anlage, insbesondere Prozess- oder Fertigungsanlage. Zudem wird die Aufgabe gelöst durch ein Leitsystem für eine technische Anlage, insbesondere Prozess- oder Fertigungsanlage, nach Anspruch 12. Außerdem wird die Aufgabe gelöst durch eine technische Anlage mit einer Orchestrierungsinstanz nach Anspruch 13 und durch ein Verfahren zum Betreiben eines technischen Moduls nach Anspruch 15. Vorteilhafte Weiterbildungen sind Gegenstand der abhängigen Ansprüche.

Die computerimplementierte Orchestrierungsinstanz zur Orchestrierung wenigstens eines technischen Moduls innerhalb einer technischen Anlage, insbesondere Prozess- oder Fertigungsanlage, ist erfindungsgemäß dazu ausgebildet:
- von dem technischen Modul eine Eingangsvariable auszulesen, welche Eingangsvariable eine Bereitschaft des technischen Moduls angibt, einen Zustand des technischen Moduls zu ändern,
- eine weitere Variable zu ermitteln, deren Wert von einem oder mehreren weiteren Zuständen, Werten oder sonstigen veränderlichen Daten des technischen Moduls oder eines oder mehrerer weiterer technischer Module abhängt,
- beim Vorliegen bestimmter Kombinationen von Werten der Eingangsvariable und der weiteren Variable ein Ändern des Zustandes des technischen Moduls durch einen Trigger von außerhalb des technischen Moduls zu ermöglichen oder zu unterbinden.
Unter einem "technischen Modul" wird vorliegend eine abgeschlossene technische Einheit verstanden, die in die (übergeordnete) Orchestrierungsinstanz der technischen Anlage integrierbar ist bzw. die Orchestrierungsinstanz ist dazu ausgebildet, das technische Modul in die technische Anlage zu integrieren und dessen Betrieb, ggf. im Zusammenspiel mit weiteren technischen Modulen, zu orchestrieren. Ein solches technisches Modul kann zum Beispiel ein Zusammenschluss mehrerer Messstellen oder ein größerer Anlagenteil der technischen Anlage sein. Ein technisches Modul kann eine beliebige Kombination aus Einzelsteuerelementen, Sensoren oder Automatisierungskomponenten umfassen. Zudem können auch softwaretechnische Abbildungen von beispielsweise Einzelsteuerelementen Teil eines technischen Moduls sein.

Die Orchestrierungsinstanz ist dazu ausgebildet, von dem technischen Modul eine Eingangsvariable auszulesen. Hierbei wird davon ausgegangen, dass eine geeignete Kommunikationsverbindung zwischen dem technischen Modul und der Orchestrierungsinstanz aufgebaut worden ist. Diese kann kabellos oder kabelgebunden sein. Die Orchestrierungsinstanz kann der Eingangsvariable entnehmen, ob das technische Modul dazu bereit ist, einen (oder mehrere) Zustände des technischen Moduls zu ändern. Dabei kann es sich bei einem Zustand beispielsweise um den Zustand einer technischen Funktion wie einer Rührfunktion oder eine Heizfunktion handeln, die definierte Zustände bzw. Funktionszustände aufweisen können. Die Orchestrierungsinstanz kann dem technischen Modul damit die Bereitschaft entnehmen, einen internen Zustand zu ändern.

Es sind aber, wie eingangs beschrieben, bei einer Orchestrierung von technischen Modulen in einer technischen Anlage von der Orchestrierungsinstanz komplexe Wechselwirkungen von Modulen innerhalb der technischen Anlage zu berücksichtigen. Daher ist die Orchestrierungsinstanz weiterhin dazu ausgebildet, eine weitere Variable zu ermitteln. Diese kann aus einem oder mehreren Zuständen des technischen Moduls ermittelt werden. Zur Ermittlung der weiteren Variable kann in der Orchestrierungsinstanz eine spezielle Verriegelungslogik implementiert sein, die automatisiert oder von einem Operator konfiguriert werden kann.

Wenn beispielsweise das technische Modul eine erste technische Funktion anbietet, die den zuvor erwähnten Zustand aufweist, kann die Orchestrierungsinstanz den Zustand einer weiteren Funktion des (selben) technischen Moduls auslesen und damit den Wert der weiteren Variable bestimmen. Die Orchestrierungsinstanz kann aber auch Werte oder sonstige veränderliche Daten des technischen Moduls oder eines oder mehrerer weitere technischer Module für die Ermittlung des Wertes der weiteren Variable hinzuziehen. Es sei darauf hingewiesen, dass die Orchestrierungsinstanz und nicht das technische Modul selbst den Wert der weiteren Variable ermittelt, da das technische Modul zum Beispiel nicht über die notwendigen Informationen bzgl. weiterer technischer Module verfügt.

Bei bestimmten Kombinationen der Eingangsvariable und der weiteren Variable ist die Orchestrierungsinstanz dazu ausgebildet, ein Ändern des Zustandes des technischen Moduls durch einen Trigger von außerhalb des technischen Moduls zu ermöglichen oder zu unterbinden. Wenn beispielsweise das technische Modul bezüglich einer Änderung des Zustandes (grundsätzliche) Bereitschaft signalisiert und der Wert der weiteren Variable beispielweise eine logische Eins darstellt, kann die Orchestrierungsinstanz das Triggern der Zustandsänderung ermöglichen. Auf der anderen Seite kann die Orchestrierungsinstanz das Triggern der Zustandsänderung auch unterbinden, wenn der Wert der weiteren Variable beispielsweise eine logische Null darstellt - obwohl das technische Modul bezüglich einer Änderung des Zustandes eine (grundsätzliche) Bereitschaft signalisiert. Dadurch kann das Triggern einer Zustandsänderung von der Orchestrierungsinstanz einfach und effektiv durch die für eine Verriegelung dienende weitere Variable unterbunden werden, ohne dass hierfür ein signifikanter Mehraufwand vonnöten wäre. Die Orchestrierungsinstanz fungiert damit als eine "Middleware" zwischen Operator bzw. Fertigungsmanagementsystem bzw. Rezeptsystem und dem oder den technischen Modulen. Der Operator, das Fertigungsmanagementsystem oder das Rezeptsystem müssen keinen direkten Einblick die Verriegelungslogiken der Orchestrierungsinstanz haben. Für sie ist es nur relevant, ob ein bestimmter Zustandsübergang aktuell getriggert werden kann oder nicht. Sie können aber den jeweiligen Wert der Eingangsvariable und der weiteren Variable erkennen.

Bevorzugt ist die computerimplementierte Orchestrierungsinstanz dazu ausgebildet, beim Vorliegen bestimmter Werte der Eingangsvariable und der weiteren Variable einem Rezeptsystem, einem Fertigungsmanagementsystem (engl. Manufacturing Execution System, kurz: MES) oder einem Operator der technischen Anlage das Triggern des Änderns des Zustandes des technischen Moduls zu ermöglichen oder für diese zu unterbinden. Unter einem Operator wird dabei ein menschlicher Bediener der Orchestrierungsinstanz bzw. einem damit verknüpften System wie einem Leitsystem verstanden. Der Operator interagiert mittels spezieller Benutzerschnittstellen mit der Orchestrierungsinstanz bzw. dem Leitsystem und steuert spezielle technische Funktionen des Systems. Hierzu kann der Operator ein Bedien- und Beobachtungssystem nutzen. Der Trigger geht demnach - wenn er von der Orchestrierungsinstanz zugelassen wird - im Rahmen dieser Weiterbildung von einem automatisch ablaufenden Rezeptsystem wie dem System "SIMATIC BATCH" der Firma Siemens oder einem menschlichen Bediener, dem Operator, aus.

Für den Fall, dass der Trigger einem Operator ermöglicht wird, ist die computerimplementierte Orchestrierungsinstanz vorteilhafterweise dazu ausgebildet, dem Operator das Ändern des Zustandes des technischen Moduls durch eine grafische Benutzerschnittstelle zu ermöglichen. Dies erfolgt bevorzugt durch Übertragen von entsprechenden Visualisierungsinformationen an einen Operator Station Client. So kann dem Operator beispielsweise eine geeignete Eingabemaske auf einem als Operator Station Client fungierenden Smartphone angezeigt werden.

Die Orchestrierungsinstanz kann nicht nur dazu ausgebildet sein, das Triggern des Änderns des Zustandes des technischen Moduls zu ermöglichen oder zu unterbinden. Vielmehr kann es auch dazu ausgebildet sein, das Triggern des Änderns des Zustandes des technischen Moduls, beispielsweise von dem Rezeptsystem oder dem Operator, zu empfangen und an das technische Modul zu übermitteln, um das Ändern des Zustandes des technischen Moduls zu initiieren. Für den Fall, dass die Kombination der Werte der Eingangsvariable und der weiteren Variable eine Zustandsänderung erlaubt, leitet die Orchestrierungsinstanz demnach das Triggern der Zustandsänderung an das technische Modul weiter, um die Änderung des Zustandes in dem technischen Modul zu initiieren. Die eigentliche Zustandsänderung wird dann innerhalb des technischen Moduls durch das technische Modul selbst vorgenommen.

Der Wert der weiteren Variable kann von einem weiteren Zustand einer technischen Funktion des technischen Moduls oder eines weiteren technischen Moduls abhängen. Die Orchestrierungsinstanz kann also (weitere) Zustände des technischen Moduls oder Zustände von weiteren technischen Module für die Ermittlung des Wertes der weiteren Variable berücksichtigen.

Der Wert der weiteren Variable kann auch von aktuell anliegenden Kommandos für Zustandsübergänge eines oder mehrerer weiteres Zustände des technischen Moduls und/oder eines weiteren technischen Moduls abhängen. Der Wert der weiteren Variabel kann somit beispielsweise erst dann den logischen Wert Eins aufweisen, wenn eine oder mehrere weitere Zustandsänderungen angefordert, aber noch nicht umgesetzt wurden.

Der Wert der weiteren Variable kann auch von einem Qualitätscode (engl. Quality Code) eines Wertes oder sonstiger veränderlicher Daten des technischen Moduls und/oder eines weiteren technischen Moduls abhängen.

Außerdem kann der Wert von einem Betriebsmodus des technischen Moduls und/oder eines weiteren technischen Moduls abhängen.

Zudem kann der Wert der weiteren Variable von einem von einem Messwert abhängen, der von dem technischen Modul und/oder einem weiteren technischen Modul ermittelt wird. Dabei kann es sich beispielsweise um einen Prozessmesswert wie einen Temperaturwert, einen Druckwert oder einen Durchflusswert handeln.

Die zuvor formulierte Aufgabe wird zudem gelöst durch ein Leitsystem für eine technische Anlage, insbesondere Prozess- oder Fertigungsanlage, die einen Operator Station Client und einen Operator Station Server zum Bedienen und Beobachten der technischen Anlage aufweist, wobei auf dem Operator Station Server eine Orchestrierungsinstanz wie zuvor erläutert computerimplementiert ist.

Unter einem "Operator Station Server" wird dabei vorliegend ein Server verstanden, der zentral Daten eines Bedien- und Beobachtungssystems sowie in der Regel Alarm- und Messwertarchive des Leitsystems der technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Die Aufgabe wird zudem gelöst durch eine technische Anlage mit einer Orchestrierungsinstanz wie zuvor erläutert und wenigstens einem technischen Modul, das technische Modul umfassend:
- wenigstens ein technisches Objekt, das zur Durchführung einer technischen Funktion ausgebildet ist,
- eine Steuereinheit, die zur Steuerung des technischen Objektes ausgebildet ist,
- eine Kommunikationseinheit, die zu einem Datenaustausch mit der Orchestrierungsinstanz ausgebildet ist, um der Orchestrierungsinstanz einen Zustand der technischen Funktion zu übermitteln und um von der Orchestrierungsinstanz einen Trigger zum Ändern des Zustandes der technischen Funktion zu erhalten.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche technischen Anlagen aus der Produktionsindustrie, Werke, in denen z.B. Autos oder Güter aller Art produziert werden. Windräder, Solaranlagen oder Kraftwerke zur Energieerzeugung sind ebenso von dem Begriff der technischen Anlage umfasst.

Bevorzugt umfasst die technische Anlage ein Visualisierungssystem, das dazu ausgebildet ist, die zur Steuerung der technischen Objekte des technischen Moduls verwendeten Anweisungen zu visualisieren. Mithilfe einer solchen graphischen Darstellung kann das technische Modul einfacher und effizienter in die technische Anlage zur Durchführung eines technischen Prozesses integriert bzw. orchestriert werden. Es ist durch das Visualisierungssystem möglich, einen Überblick über die aktuell in dem technischen Modul geltenden bzw. aktiven technischen Funktionen zu erhalten und diese ggf. zu ergänzen. Die für die Visualisierung notwendigen Visualisierungsinformationen können dem Visualisierungssystem in einer Formatierung gemäß dem zuvor genannten Standard VDI/VDE/NAMUR 2658 übermittelt werden.

Das technische Modul kann eine Mehrzahl von technischen Objekten umfassen, mit deren Hilfe eine technische Funktion durchgeführt werden kann. Beispielsweise kann ein technisches Objekt ein Heizkessel, mit dem eine Flüssigkeit erwärmt werden kann, oder ein Förderband sein, mit dem ein Medium oder ein Gegenstand befördert werden kann. Das technische Modul umfasst zusätzlich zu dem oder den technischen Objekten (wenigstens) eine Steuereinheit. Diese steuert (und regelt ggf.) das oder die technischen Objekte auf Basis von in dem technischen Modul hinterlegten bzw. hinterlegbaren Regeln und Verschaltungen. Diese von einem Hersteller des technischen Moduls vorgegeben und in dem technischen Modul fest hinterlegt.

Das technische Modul ist dazu ausgebildet, in der technischen Anlage eine komplexe technische Funktion auszuführen, wie z.B. das kontrollierte Pumpen von Flüssigkeit, das Erhitzen von Wasser und das Aufrechterhalten einer bestimmten Temperatur in einem Tank, das Ausführen einer Filterfunktionalität und dergleichen vorzunehmen. Zu diesem Zweck kann das technische Modul beispielsweise Ventile, Tanks, Sensoren und dergleichen als technische Objekte aufweisen.

Das technische Modul weist zudem eine Kommunikationseinheit auf, die zu einem Datenaustausch mit externen Kommunikationspartnern wie der Orchestrierungsinstanz dient. Diese Kommunikationseinheit kann einen Server, insbesondere einen OPC UA Server, umfassen. Alternativ oder zusätzlich kann die Kommunikationseinheit auch einen Publisher, insbesondere einen OPC UA Publisher, umfassen. Publish / Subscribe ist dabei ein weit verbreiteter und bekannter Mechanismus, über den Subskribenten von Publishern Informationen in Form von Nachrichten erhalten.

Die Orchestrierungsinstanz will beispielsweise ein bestimmtes Produkt durch das technische Modul (und ggf. weitere technische Module) erzeugen lassen. Hierzu hat es im Vorhinein Kenntnis darüber erlangt, welche technische Funktion(en) (engl. Services) das technische Modul anbietet. Diese Informationen sind der Orchestrierungsinstanz beispielsweise über den Import einer sogenannten MTP-Datei (Module Type Package) mitgeteilt worden. Besonders vorteilhaft sind die eine oder mehrere technische Funktionen durch die Steuereinheit als ein durchführbarer Service gemäß dem Standard VDI/VDE/NAMUR 2658, der zum Zeitpunkt der vorliegenden Patentanmeldung gültig ist, ansprechbar. Speziell im Kontext einer modularen Produktion oder Fertigung setzt sich der genannte Standard immer mehr durch, wodurch sich ein entsprechend ausgebildetes technisches Modul besonders einfach in einer Automatisierung einer technischen Anlage integrieren lässt.

Die zuvor formulierte Aufgabe wird zudem gelöst durch ein Verfahren zum Betreiben eines technischen Moduls in einer technischen Anlage, insbesondere Fertigungs- oder Prozessanlage, wobei das technische Modul wie zuvor erläutert ausgebildet ist, das Verfahren umfassend:
a) Integrieren des technischen Moduls in die technische Anlage, wobei im Zuge dessen eine Kommunikationsverbindung des technischen Moduls zu einer Orchestrierungsinstanz wie zuvor erläutert eingerichtet wird,
b) Betreiben des technischen Moduls.

Die Aufgabe wird zudem gelöst durch ein Computerprogramm mit durch einen Computer ausführbaren Programmcodeanweisungen zur Implementierung eines zuvor beschriebenen Verfahrens, und durch ein computerlesbares Medium, umfassend Befehle, die bei der Ausführung durch einen Computer diesen veranlassen, ein zuvor beschriebene Verfahren auszuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine technische Anlage in einer schematischen Darstellung; und
- FIG 2: eine visuelle Darstellung einer Verriegelungslogik einer erfindungsgemäßen Orchestrierungsinstanz.

In der Figur ist eine modular aufgebaute technische Anlage 1 dargestellt. Die technische Anlage 1 umfasst ein erstes technisches Modul 2, ein zweites technisches Modul 3, einen Operator Station Server 4, ein erstes Rezeptsystem 5, ein zweites Rezeptsystem 6, einen ersten Operator Station Client 7 und einen zweiten Operator Station Client 8. Auf dem Operator Station Server 4 ist eine Orchestrierungsinstanz 9 computerimplementiert.

Das erste technische Modul 2 stellt eine erste Eingangsvariable 10 und eine zweite Eingangsvariable 11 sowie Sensormesswerte 12 bereit. Analog dazu stellt das zweite technische Modul 3 eine dritte Eingangsvariable 13, eine vierte Eingangsvariable 14 sowie Sensormesswerte 15 bereit. Der Operator Station Server 4 ist dazu ausgebildet, mit den technischen Modulen 2, 3 über eine OPC UA Verbindung zu kommunizieren und Daten auszutauschen.

Die erste Eingangsvariable 10 und die zweite Eingangsvariable 11 sind der Orchestrierungsinstanz 9 über eine erste Schnittstelle 16 zugänglich. Die dritte Eingangsvariable 13 und die vierte Eingangsvariable 14 sind der Orchestrierungsinstanz 9 über eine zweite Schnittstelle 17 zugänglich. Die Sensormesswerte 12, 15 sind der Orchestrierungsinstanz 9 über ein digitales Abbild 18 der technischen Module 2, 3 zugänglich. Für den Fall einer als Prozessanlage ausgebildeten technischen Anlage 1 wird dieses Abbild 18 auch als Prozessabbild bezeichnet.

Die technischen Module 2, 3 sind für einen modularen Einsatz in der technischen Anlage 1 ausgebildet. Zu diesem Zweck weisen sie eine Mehrzahl von technischen Objekten wie Sensoren und Aktoren auf, die jeweils zur Ausübung von technischen Funktionen ausgebildet sind. Eine technische Funktion kann beispielsweise ein Aufheizen, ein Rühren, ein Bewegen, ein Messen oder dergleichen darstellen.

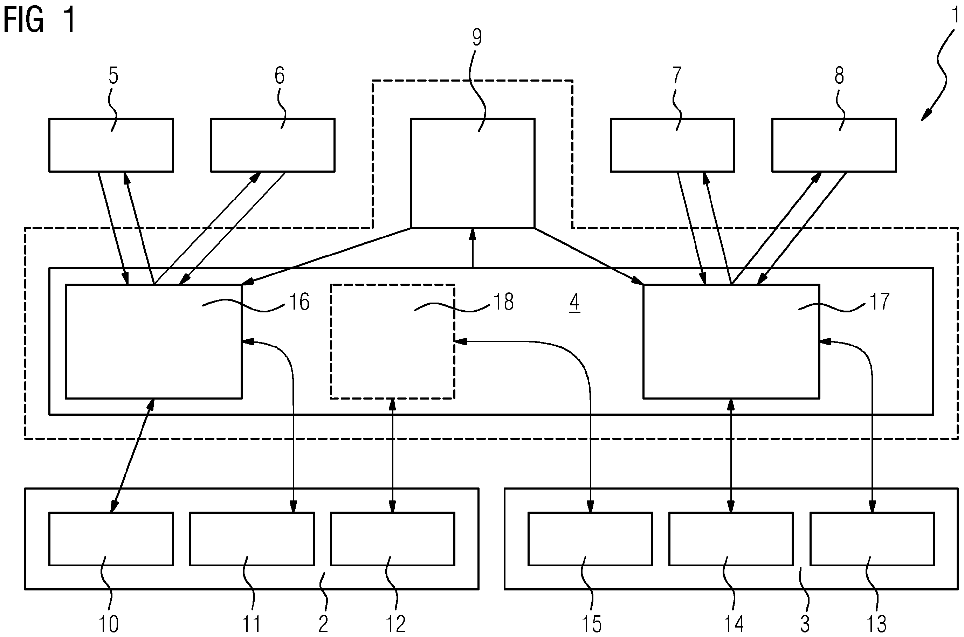

Die Orchestrierungsinstanz 9 liest beispielsweise aus der Schnittstelle 16 (in FIG 1 links) den Wert der ersten Eingangsvariable 10 aus und ermittelt hieraus die Bereitschaft des ersten technischen Moduls 2, einen Zustand einer technischen Funktion des ersten technischen Moduls 2 zu ändern.

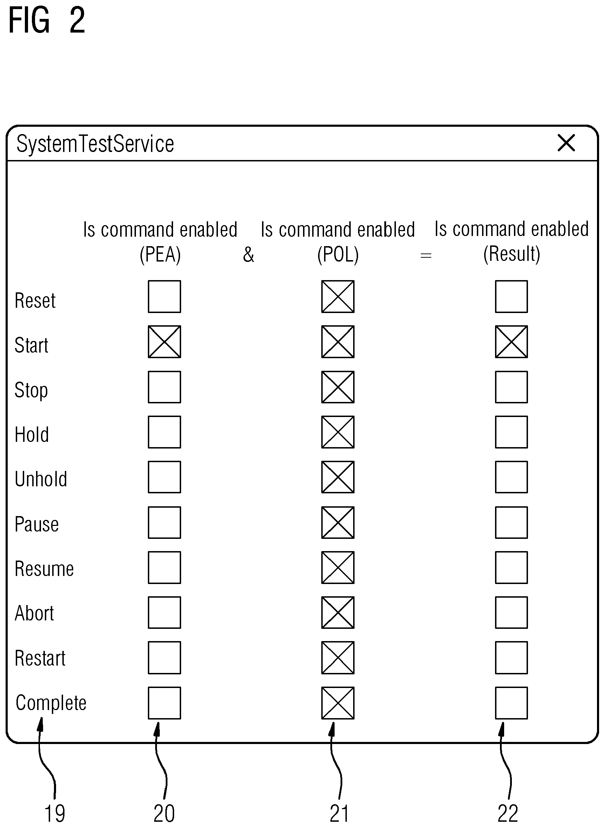

Zudem ermittelt die Orchestrierungsinstanz 9 eine weitere Variable, deren Wert von einem oder mehreren weiteren Zuständen, Werten oder sonstigen veränderlichen Daten des ersten technischen Moduls 2 oder des zweiten technischen Moduls 3 abhängt. FIG 2 zeigt einen Überblick über verschiedene Triggermöglichkeiten 19 (erste Spalte links), die ein Operator über einen der Operator Station Clients 7, 8 oder ein Rezeptsystem 5, 6 haben, um eine Zustandsänderung in einem der technischen Module 2, 3 zu bewirken. Die Trigger bzw. Kommandos weisen vorliegend die Bezeichnungen "Reset", "Start", "Stop", "Hold", "Unhold", "Pause", "Resume", "Abort", "Restart" und "Complete" auf. In einer zweiten Spalte 20 sind logische Werte der Eingangsvariable 10 des ersten technischen Moduls 2 dargestellt. Dabei symbolisiert ein leeres Quadrat eine logische Null und ein Quadrat mit einem darin enthaltenen Kreuz eine logische Eins. Es ist zu erkennen, dass nur bezüglich des Triggers/Kommandos "Start" eine logische Eins vorliegt. Dies bedeutet, dass das erste technischen Modul 1 dazu bereit ist, auf den Trigger bzw. das Kommando "Start" zu reagieren und eine interne Zustandsänderung einer zugehörigen technischen Funktion vorzunehmen (beispielsweise von "Rührer ruhend" zu "Rührer in Betrieb").

In einer dritten Spalte 21 sind die Werte der weiteren Variable in einer analogen Symbolkodierung dargestellt. Es ist zu erkennen, dass alle Werte der weiteren Variable eine logische Eins symbolisieren. Mit anderen Worten hat die Orchestrierungsinstanz 9 keine Einwände gegen die Weiterleitung des jeweiligen Triggers/Kommandos an das erste technische Modul 2. In einer vierten Spalte 22 sind die resultierenden Werte dargestellt, die sich aus einer logischen UND-Verknüpfung der logischen Werte der zweiten Spalte 20 und der dritten Spalte 21 ergeben. Vorliegend weist die vierte Spalte 22 nur für den Trigger bzw. das Kommando "Start" eine logische Eins auf. Eine logische Eins in der vierten Spalte 22 bedeutet hierbei, dass die Orchestrierungsinstanz 9 ein Ändern des Zustandes des ersten technischen Moduls 2 durch einen Trigger von außerhalb des ersten technischen Moduls 2 (durch den Operator oder ein Rezeptsystem 5, 6) ermöglicht. Umgekehrt werden die übrigen Trigger bzw. Kommandos für ein Rezeptsystem 5, 6 bzw. den Operator gesperrt. Der von dem Operator oder einem Rezeptsystem 5, 6 ausgelöste Trigger bzw. das Kommando übermittelt die Orchestrierungsinstanz 9 im Anschluss an das erste technische Modul 2.

Es sind auch weitere logische Operationen wie "OR" oder "XOR" möglich, um eine Kombination der logischen Werte der zweiten Spalte 20 und der dritten Spalte 21 zu bilden. Zudem kann eine logische Eins in der vierten Spalte 22 auch bedeuten, dass gerade bei dieser Kombination der Trigger bzw. das Kommando nicht ermöglicht wird.

Im Folgenden wird ein Verfahren zum Betreiben der technischen Module 2, 3 in der technischen Anlage 1 erläutert: Zunächst werden die technischen Module 2, 3 in die technische Anlage 1 integriert. Dabei werden hier nicht näher erläuterte logistische Schritte vorgenommen (Leitungen, Energieversorgung, Platzierung etc.). Im Zuge der Einrichtung wird auch eine Kommunikationsverbindung von dem Operator Station Server 4 zu den technischen Modulen 2, 3 eingerichtet.

Automatisch oder durch eine manuelle Vorgabe eines Operators der technischen Anlage werden Trigger bzw. Kommandos von dem Operator Station Server 4 an die Kommunikationseinheiten der technischen Module 2, 3 übertragen. Dabei kann es sich um ein Rezept eines der Rezeptsysteme 5, 6 handeln. Ein solches Rezept beinhaltet einen oder mehrere Schritte, die von den technischen Modulen 2, 3 bearbeitet werden sollen. Dabei sind von dem Rezept auch Parameter umfasst, die für die Bearbeitung der einzelnen Schritte relevant sind. Zum Beispiel kann ein Rezept die folgenden Informationen umfassen:
- Fülle 100 Liter des Fluids A aus Zulauf 1 in einen Behälter X
- Erhitze das Fluid auf eine Temperatur von 100 Grad Celsius
- Mische das erhitzte Fluid A mit 10 Liter eines Fluids B aus Zulauf 2
- Lasse das Gemisch aus Fluid A und Fluid B auf eine Temperatur von 30 Grad Celsius abkühlen
- Leite das abgekühlte Gemisch in einen Behälter Y.

Die Trigger/Kommandos können dabei dem formalen Aufbau gemäß dem Standard VID/VDE/NAMUR 2658 folgen und einzelne "Services" adressieren, die die technischen Module 2, 3 als "Dienstleistung" anbieten.

Die Orchestrierungsinstanz 9 ist dabei wie zuvor erläutert ausgebildet und führt, wie beschrieben, die besonders vorteilhafte Prüfung mittels der weiteren Variable durch. Dadurch kann aufwandsarm sichergestellt werden, dass die einzelnen technischen Funktionen der technischen Module 2, 3 nur dann eine Zustandsänderung vornehmen, wenn sie selbst dazu bereits sind und die Orchestrierung der technischen Module 2, 3 im Gesamtkontext der technischen Anlage dies auch erlaubt.

Obwohl die Erfindung im Detail durch die bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementierte Orchestrierungsinstanz (9) zur Orchestrierung wenigstens eines technischen Moduls (2, 3) innerhalb einer technischen Anlage (1), insbesondere Prozess- oder Fertigungsanlage, die dazu ausgebildet ist,
- von dem technischen Modul (2, 3) eine Eingangsvariable (10, 11, 13, 14) auszulesen, welche Eingangsvariable (10, 11, 13, 14) eine Bereitschaft des technischen Moduls (2, 3) angibt, einen Zustand des technischen Moduls (2, 3) zu ändern,
- eine weitere Variable zu ermitteln, deren Wert von einem oder mehreren weiteren Zuständen, Werten oder sonstigen veränderlichen Daten des technischen Moduls (2, 3) oder eines oder mehrerer weiterer technischer Module (2, 3) abhängt,
- beim Vorliegen bestimmter Kombinationen von Werten der Eingangsvariable (10, 11, 13, 14) und der weiteren Variable ein Ändern des Zustandes des technischen Moduls (2, 3) durch einen Trigger von außerhalb des technischen Moduls (2, 3) zu ermöglichen oder für diese zu unterbinden.

2. Computerimplementierte Orchestrierungsinstanz (9) nach Anspruch 1, die dazu ausgebildet ist, beim Vorliegen bestimmter Werte der Eingangsvariable (10, 11, 13, 14) und der weiteren Variable einem Rezeptsystem (5, 6), einem Fertigungsmanagementsystem oder einem Operator der technischen Anlage (1) das Triggern des Änderns des Zustandes des technischen Moduls (2, 3) zu ermöglichen oder zu unterbinden.

3. Computerimplementierte Orchestrierungsinstanz (9) nach Anspruch 2, die dazu ausgebildet ist, dem Operator das Ändern des Zustandes des technischen Moduls (2, 3) durch eine grafische Benutzerschnittstelle (7, 8) zu ermöglichen, insbesondere durch Übertragen von entsprechenden Visualisierungsinformationen an einen Operator Station Client (7, 8).

4. Computerimplementierte Orchestrierungsinstanz (9) nach einem der vorangegangenen Ansprüche, der dazu ausgebildet ist, das Triggern des Änderns des Zustandes des technischen Moduls (2, 3) zu empfangen und an das technische Modul (2, 3) zu übermitteln, um das Ändern des Zustandes des technischen Moduls (2, 3) zu initiieren.

5. Computerimplementierte Orchestrierungsinstanz (9) nach einem der vorangegangenen Ansprüche, bei der der Zustand des technischen Moduls (2, 3) einen Zustand einer technischen Funktion des technischen Moduls (2, 3) darstellt.

6. Computerimplementierte Orchestrierungsinstanz (9) nach einem der vorangegangenen Ansprüche, in welcher eine Verrieglungslogik implementiert ist, die für das Ermitteln der weiteren Variable ausgebildet ist.

7. Computerimplementierte Orchestrierungsinstanz (9) nach einem der vorangegangenen Ansprüche, bei der der Wert der weiteren Variable von einem weiteren Zustand einer technischen Funktion des technischen Moduls (2, 3) oder eines weiteren technischen Moduls (2, 3) abhängt.

8. Computerimplementierte Orchestrierungsinstanz (9) nach einem der vorangegangenen Ansprüche, bei der der Wert der weiteren Variable von aktuell anliegenden Kommandos für Zustandsübergänge eines oder mehrerer weiteres Zustände des technischen Moduls (2, 3) und/oder eines weiteren technischen Moduls (2, 3) abhängt.

9. Computerimplementierte Orchestrierungsinstanz (9) nach einem der vorangegangenen Ansprüche, bei der der Wert der weiteren Variable von einem Qualitätscode eines Wertes oder sonstiger veränderlicher Daten des technischen Moduls (2, 3) und/oder eines weiteren technischen Moduls (2, 3) abhängt.

10. Computerimplementierte Orchestrierungsinstanz (9) nach einem der vorangegangenen Ansprüche, bei der der Wert der weiteren Variable von einem Betriebsmodus des technischen Moduls (2, 3) und/oder eines weiteren technischen Moduls (2, 3) abhängt.

11. Computerimplementierte Orchestrierungsinstanz (9) nach einem der vorangegangenen Ansprüche, bei der der Wert der weiteren Variable von einem Messwert abhängt, der von dem technischen Modul (2, 3) und/oder einem weiteren technischen Modul (2, 3) ermittelt wird.

12. Leitsystem für eine technische Anlage (1), insbesondere Prozess- oder Fertigungsanlage, die einen Operator Station Client (7, 8) und einen Operator Station Server (4) zum Bedienen und Beobachten der technischen Anlage (1) aufweist, wobei auf dem Operator Station Server (4) eine Orchestrierungsinstanz (9) nach einem der Ansprüche 1 bis 11 computerimplementiert ist.

13. Technische Anlage (1) mit einer Orchestrierungsinstanz (9) nach einem der Ansprüche 1 bis 11 und wenigstens einem technischen Modul (2, 3), das technische Modul (2, 3) umfassend:
- wenigstens ein technisches Objekt, das zur Durchführung einer technischen Funktion ausgebildet ist,
- eine Steuereinheit, die zur Steuerung des technischen Objektes ausgebildet ist,
- eine Kommunikationseinheit, die zu einem Datenaustausch mit der Orchestrierungsinstanz (9) ausgebildet ist, um der Orchestrierungsinstanz (9) einen Zustand der technischen Funktion zu übermitteln und um von der Orchestrierungsinstanz (9) einen Trigger zum Ändern des Zustandes der technischen Funktion zu erhalten.

14. Technische Anlage (1) nach Anspruch 13, bei der die technische Funktion durch die Steuereinheit als ein durchführbarer Service gemäß dem Standard VDI/VDE/NAMUR 2658, der zum Zeitpunkt der vorliegenden Patentanmeldung gültig ist, ansprechbar ist.

15. Verfahren zum Betreiben eines technischen Moduls (2, 3) in einer technischen Anlage (1), insbesondere Fertigungs- oder Prozessanlage, wobei das technische Modul (2, 3) gemäß Anspruch 14 ausgebildet ist, das Verfahren umfassend:
a) Integrieren des technischen Moduls (2, 3) in die technische Anlage (1), wobei im Zuge dessen eine Kommunikationsverbindung des technischen Moduls (2, 3) zu einer Orchestrierungsinstanz (9) gemäß einem der Ansprüche 1 bis 12 eingerichtet wird,
b) Betreiben des technischen Moduls (2, 3).
